# FASCICULE DE BREVET EUROPEEN

(11) **EP 3 006 679 B1**
(45) Date de publication et mention de la délivrance du brevet: **06.09.2023**
(21) Numéro de dépôt: 15185111.0
(22) Date de dépôt: 14.09.2015
(51) Int. Cl.: F01D 11/22

(54) **CARTER EXTERNE DE TURBOMACHINE AXIALE ET PROCÉDÉ DE COMMANDE D'UN DISPOSITIF D'ÉTANCHÉITÉ DE CARTER EXTERNE DE TURBOMACHINE AXIALE**
AUSSENGEHÄUSE EINER AXIALEN TURBOMASCHINE UND VERFAHREN ZUR STEUERUNG EINER DICHTUNGSVORRICHTUNG EINES AUSSENGEHÄUSES EINER AXIALEN TURBOMASCHINE
EXTERNAL CASING OF AN AXIAL TURBOMACHINE AND METHOD FOR CONTROLLING A SEALING DEVICE OF AN EXTERNAL CASING OF AN AXIAL TURBOMACHINE

(30) Priorité: 10.10.2014 BE 201400742
(43) Date de publication de la demande: 13.04.2016
(73) Titulaire: Safran Aero Boosters SA, 4041 Herstal (BE)
(72) Inventeur: CORTEQUISSE, M. Jean-François, 3870 Heers (BE); MINOT, Philippe, 1150 Woluwé Saint-Pierre (BE)
(74) Mandataire: Lecomte & Partners

(56) Documents cités:
- EP-A1- 2 434 164
- EP-A2- 1 467 066
- WO-A1-2010/112421
- SU-A1- 1 471 661
- SU-A1- 1 749 494
- US-A- 5 545 007
- US-A1- 2007 237 628

## Description

### Domaine technique

L'invention a trait à un carter externe de turbomachine axiale avec un dispositif d'étanchéité. Plus précisément, l'invention a trait à un carter externe de compresseur de turbomachine axiale muni d'un dispositif d'étanchéité autour d'une rangée d'aubes rotoriques. L'invention a également trait à une turbomachine axiale. L'invention a également trait à un procédé de commande d'un dispositif d'étanchéité de turbomachine axiale.

### Technique antérieure

Dans l'optique d'augmenter le rendement, une turbomachine est dotée de dispositif d'étanchéité autour de ses rangées d'aubes. Ces dispositifs permettent d'adapter le jeu entre une surface interne d'un carter, et les extrémités externes des aubes rotoriques disposées à l'intérieur de la surface interne. Ainsi en conditions de fonctionnement, le jeu peut être réduit afin de limiter les fuites dynamiques entre la surface et les aubes.

Un tel dispositif peut comprendre un carter externe servant de support pour une virole externe qui y est reliée au moyen d'éléments déformables. En cas de changement de conditions de vol, des aubes rotoriques peuvent venir en contact de la virole, et la déplacer radialement. Le mouvement est permis par les éléments déformables dont l'amplitude de compression autorise l'ajustement de la position de la virole.

Le document EP 2 495 399 A1 divulgue un carter externe de turbomachine axiale comprenant une paroi annulaire dans laquelle est formée une gorge annulaire interne. La gorge annulaire abrite des éléments élastiques reliant une virole externe segmentée au fond de la gorge, et donc à la paroi annulaire. Lorsque le rotor de la turbomachine se désaligne par rapport à son axe de rotation, les aubes rotoriques viennent en contact de la virole et la repoussent. Un tel dispositif d'étanchéité permet donc de s'adapter à différentes conditions de vol, et améliore la sécurité de fonctionnement. Toutefois, le gain de rendement qu'offre un tel dispositif reste limité, tout comme le nombre de configurations auxquelles il est susceptible de s'adapter.

Le document SU 1749494 A1 divulgue un carter externe de turbomachine axiale. Ce carter ne prévoit pas de moyens de détection du jeu radial entre les extrémités des aubes et la virole externe.

Le document EP 1 467 066 A2 propose un compresseur de turboréacteur. L'étanchéité autour du rotor est assurée à l'aide d'un support mobile en forme de la lettre « L », et qui porte une couche d'abradable interne. L'ajustement entre l'abradable et les aubes est assuré par des actionneurs piézoélectriques.

Le document WO 2010/112421 A1 divulgue une turbomachine avec une virole mobile axialement de sorte à moduler le jeu autour d'une rangée d'aubes. L'ajustement du jeu repose sur des éléments piézoélectriques pilotés par des convertisseurs thermiques.

Le document WO 96/17156 A1 divulgue un carter externe de turbomachine axiale avec un dispositif de contrôle du jeu radial entre les extrémités des aubes rotoriques et une virole externe. Le dispositif en question comprend un connecteur piézoélectrique formant un barreau ondulé fixé au carter et à la virole interne. Ce dispositif est massif et volumineux.

US 5 545 007 divulgue un carter externe de turbomachine axiale selon le préambule de la revendication 1.

### Résumé de l'invention

### Problème technique

L'invention a pour objectif de résoudre au moins un des problèmes posés par l'art antérieur. Plus précisément, l'invention a pour objectif d'augmenter le rendement d'une turbomachine axiale munie d'un dispositif d'étanchéité. L'invention a également pour objectif d'augmenter le nombre de configurations auxquelles un dispositif d'étanchéité est apte à s'adapter.

### Solution technique

L'invention a pour objet un carter externe de turbomachine axiale, notamment de compresseur de turbomachine axiale, le carter comprenant : une paroi circulaire comportant une gorge annulaire interne ; une virole externe d'étanchéité disposée au moins partiellement dans la gorge et destinée à assurer une étanchéité entre le carter externe et une rangée annulaire d'aubes rotoriques de la turbomachine ; des éléments de liaison reliant la virole externe à la paroi ; les éléments de liaison sont des actionneurs piézoélectriques configurés pour déplacer et/ou déformer la virole afin de modifier le jeu entre la virole et les aubes rotoriques ; remarquable en ce que les actionneurs piézoélectriques sont disposés en deux rangées annulaires.

Selon un mode avantageux de l'invention, les actionneurs piézoélectriques sont monoblocs et sont disposés de sorte à se déformer radialement afin de déplacer et/ou déformer radialement la virole.

Selon un mode avantageux de l'invention, le carter comprend au moins un raccord électrique qui est branché aux actionneurs piézoélectriques et qui traverse la paroi, préférentiellement le raccord électrique traverse radialement la paroi au niveau axialement de la gorge annulaire.

Selon un mode avantageux de l'invention, au moins un ou chaque raccord électrique comprend un fil électrique, la paroi comprenant des étanchéités autour de chaque raccord électrique.

Selon un mode avantageux de l'invention, le carter comprend des joints d'étanchéité circulaires en amont et en aval de la virole externe et coopérant avec la paroi.

Selon un mode avantageux de l'invention, le carter comprend un module de mesure de jeu configuré pour mesurer le jeu entre la virole externe et les aubes rotoriques, le module étant disposé axialement au niveau de la gorge annulaire, éventuellement le module est disposé dans la gorge.

Selon un mode avantageux de l'invention, le carter comprend une alimentation configurée pour alimenter individuellement chaque actionneur piézoélectrique.

Selon un mode avantageux de l'invention, la gorge comprend une surface annulaire amont et une surface annulaire aval dont les profils de révolution s'étendent principalement radialement, les actionneurs piézoélectriques étant disposés axialement entre lesdites surfaces annulaires radiales, préférentiellement chaque actionneur piézoélectrique est disposé à distance de chaque surface annulaire radiale.

Selon un mode avantageux de l'invention, la paroi comprend une couche isolante électriquement, éventuellement en contact avec des actionneurs piézoélectriques.

Selon un mode avantageux de l'invention, la paroi comprend des portions annulaires prolongeant axialement la gorge annulaire en amont et en aval, la gorge et les portions annulaires étant venues de matière.

Selon un mode avantageux de l'invention, la paroi comporte une surface générale interne avec un profil de révolution autour de l'axe de rotation de la turbomachine, et en ce que la virole externe comprend une surface annulaire interne, la surface annulaire interne de la virole étant mobile entre une position radialement interne à la surface générale interne de la paroi et une position radialement externe à la surface générale interne de la paroi.

Selon un mode avantageux de l'invention, la virole est segmentée, éventuellement la virole est métallique et forme un ruban ; ou la virole est venue de matière et comprend une surface annulaire.

Selon un mode avantageux de l'invention, le carter est un carter composite à matrice organique, éventuellement le carter est formé de demi-coquilles.

Selon un mode avantageux de l'invention, la virole comprend un support et une couche circulaire ou semi-circulaire de matériau abradable.

L'invention a également pour objet une turbomachine, comprenant un carter externe entourant au moins une rangée annulaire d'aubes rotoriques, remarquable en ce que le carter est conforme à l'invention, préférentiellement le carter est un carter de compresseur, éventuellement un carter de compresseur basse pression.

Selon un mode avantageux de l'invention, la turbomachine comprend un capteur de vibrations radiales des aubes rotoriques, les actionneurs piézoélectriques étant configurés de sorte à déplacer et/ou à déformer radialement la virole externe en fonction des vibrations radiales des aubes mesurées par le capteur de vibrations.

L'invention a également trait à un procédé de commande d'un dispositif d'étanchéité de carter externe de turbomachine axiale, conforme à la revendication 15.

### Avantages apportés

L'invention permet de piloter au plus près le jeu entre la virole et les extrémités radialement externes des aubes. L'emploi d'actionneurs piézoélectriques offre une rapidité de réponse, et une grande précision de positionnement. De la sorte, la position de la virole est réglée au plus près en la déplaçant rapidement, ce qui permet de contrôler efficacement le jeu entre la virole et les aubes.

La forme de la gorge permet d'apporter des brides radiales de renfort permettant de rigidifier radialement le carter, par exemple contre des déformations d'ovalisation. La gorge forme en outre un espace qui protège les actionneurs piézoélectriques.

Le procédé renforce la sécurité car l'emploi de l'altitude permet d'anticiper sur les conditions de fonctionnement de la turbomachine lorsqu'il s'agit d'un turboréacteur ou turbopropulseur d'un aéronef. L'augmentation du jeu de sécurité s'effectue en fonction du risque, d'une probabilité d'être exposé à des perturbations aléatoires.

### Brève description des dessins

La figure 1 représente une turbomachine axiale selon l'invention.
La figure 2 esquisse un compresseur de turbomachine selon l'invention.
La figure 3 illustre un dispositif d'étanchéité pour carter de turbomachine selon l'invention.
La figure 4 présente un diagramme d'un procédé d'ajustement du jeu entre des aubes rotoriques et une virole externe d'un carter de turbomachine selon l'invention.

### Description des modes de réalisation

Dans la description qui va suivre, les termes intérieur ou interne et extérieur ou externe renvoient à un positionnement par rapport à l'axe de rotation d'une turbomachine axiale.

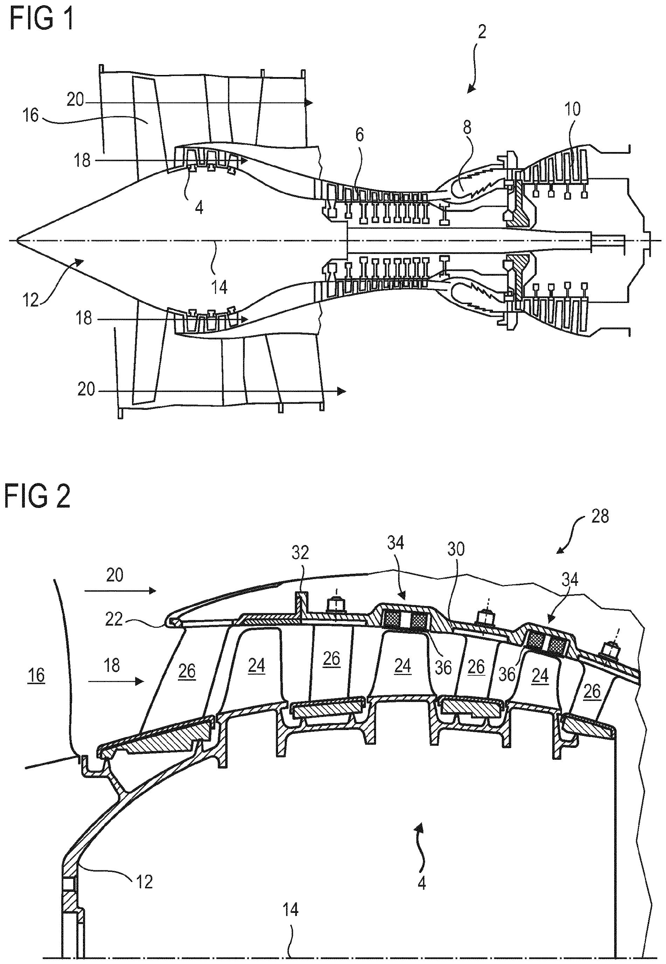

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Le compresseur comprend un carter externe 28 avec une paroi circulaire 30 ou annulaire servant de lien mécanique qui relie le bec de séparation au carter intermédiaire de la turbomachine. En complément, le carter 28 peut présenter des moyens de fixation, telles des brides annulaires de fixation 32. La paroi 30 sert également de support de montage aux aubes statoriques 26 qui s'étendent essentiellement radialement depuis la paroi 30. La paroi 30 peut présenter des épaulements annulaires formant des butées bloquant axialement les plateformes des aubes statoriques 26. La paroi 30 peut être généralement tubulaire, et éventuellement présenter un profil de révolution arqué.

La paroi 30 peut être réalisée en un matériau composite, par exemple avec une résine organique et des fibres de carbone, et/ou éventuellement un pli en fibres de verre. Le matériau composite améliore le rapport résistance/poids. La présence de fibres de verre a pour effet de créer une couche isolante. La paroi 30 peut présenter une épaisseur généralement constante afin de préserver sa légèreté, sa compacité, et simplifier la réalisation d'une préforme fibreuse correspondante.

Afin d'optimiser le rendement, le carter 28 est muni d'au moins un dispositif d'étanchéité 34 associé à une rangée annulaire d'aubes rotoriques 24. Chaque dispositif d'étanchéité 34 comprend une virole externe 36 mobile radialement de sorte à suivre les déplacements radiaux des extrémités externes des aubes rotoriques 24. Le dispositif 34 est intégré dans l'épaisseur de la paroi 30 pour améliorer la compacité.

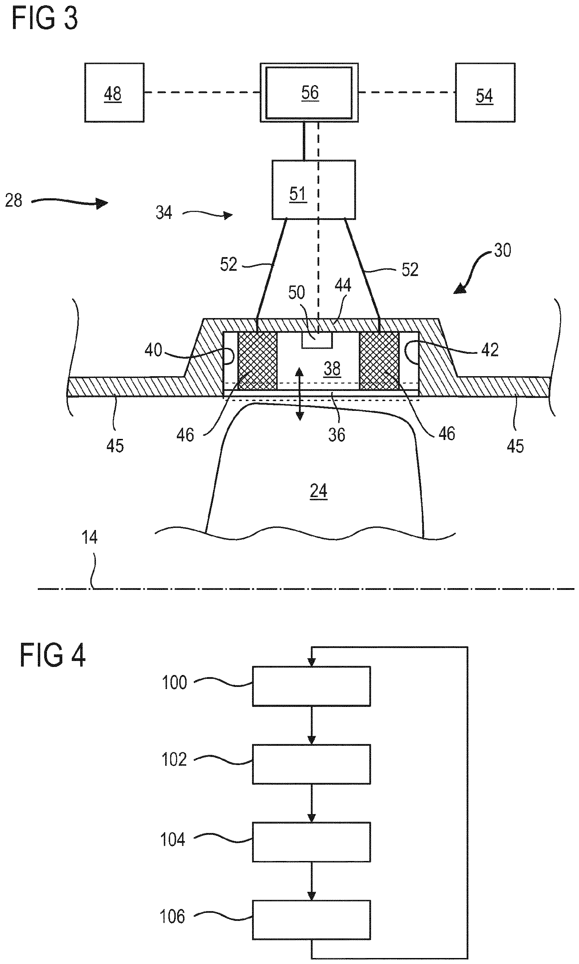

La figure 3 esquisse un dispositif d'étanchéité 34 selon l'invention. Une portion de la paroi 30 du carter 28, une extrémité d'aube rotorique 24, l'axe de rotation 14 sont représentés.

La paroi 30 présente une gorge annulaire 38 ouverte radialement vers l'intérieur, son profil est ouvert vers l'aube 24. La gorge 38 comporte une surface annulaire amont 40 et une surface annulaire aval 42 qui s'étendent principalement radialement. Ces surfaces radiales (40 ; 42) peuvent être généralement parallèles. La gorge 38 comprend en outre une portion annulaire de jonction 44 qui sépare axialement les surfaces radiales (40 ; 42). La paroi comprend des portions annulaires latérales 45 prolongeant axialement la gorge annulaire en amont et en aval ; et ce sur la circonférence de la gorge. La gorge et les portions latérales 45 peuvent être venues de matière de sorte à former un bloc de matière étanche et homogène.

Le dispositif d'étanchéité 34 est logé dans la gorge annulaire 38. Sa virole externe 36 présente une surface en regard des extrémités externes des aubes 24. La virole 36 peut être circulairement disposée dans la gorge 38, et peut être segmentée ; ou être d'un seul tenant. Dans ce dernier cas, la virole peut se déformer de sorte à ce que son diamètre et sa circonférence soient modulables. La virole externe 36 peut glisser le long des, préférentiellement contre les, surfaces radiales (40 ; 42) de sorte à privilégier l'étanchéité d'amont en aval de l'aube. Ainsi, la virole peut délimiter l'espace annulaire interne de la gorge 38, et limiter l'échauffement. Le carter peut comprendre des joints d'étanchéité circulaires disposés en amont et en avel de ladite virole pour assurer une étanchéité avec la paroi, les joints peuvent être à des interfaces fixes.

Le dispositif d'étanchéité 34 comprend des éléments de liaison 46 qui joignent la virole externe 36, éventuellement chaque segment de virole, à la paroi 30. Ils permettent une articulation de la virole 36 par rapport à la paroi 30. Les éléments 46 sont au moins partiellement, préférentiellement totalement, logés dans la gorge annulaire 38.

Les éléments de liaison 46 sont des actionneurs piézoélectriques 46. Les actionneurs piézoélectriques 46 sont bien connus de l'homme du métier, ils peuvent se déformer sous l'effet d'un champ, d'une alimentation électrique. Ils présentent chacun une face fixée à la paroi 30, dans le fond de la gorge 38 formé par la portion annulaire de jonction 44, et une face fixée à la virole externe 36. Ils sont agencés de sorte à pouvoir se déformer radialement, c'est-à-dire à s'épaissir ou s'amincir radialement de sorte à déplacer ou déformer radialement la virole externe 36. Ainsi, la virole 36 peut être rétractée dans la gorge 38 radialement vers l'extérieur, et/ou déployée hors de la gorge 38 vers l'intérieur. Une position de repos, par exemple en l'absence d'alimentation peut être choisie de sorte à réduire au maximum le jeu, ce qui augmente le rendement global de la turbomachine. Les actionneurs 46 peuvent être monoblocs avec une structure multicouche.

Puisque la virole 36 protège thermiquement les actionneurs piézoélectriques 46, ceux-ci conservent leurs performances. Autour de la gorge 38, la paroi 30 peut également contribuer à réguler la température des actionneurs piézoélectriques 46. La paroi 30 peut former une barrière étanche qui protège les actionneurs piézoélectriques 46 contre des attaques chimiques intrinsèques à une turbomachine.

Le carter peut comprendre un module de détermination de l'altitude 48, et/ou un module de mesure du jeu 50 entre la virole externe 36 et les extrémités externes des aubes rotoriques 24. L'information, le signal fourni par le module de détermination de l'altitude 48 et/ou par le module de mesure du jeu 50 sont employées pour ajuster le jeu radial annulaire entre l'aube et la virole. Le module de détermination de l'altitude 48 peut être commun à celui de la turbomachine, il peut être celui d'un aéronef sur lequel la turbomachine est montée. Le module de mesure du jeu 50 entre la virole 36 et les aubes 24, qui mesure en continu, en plusieurs endroit de la circonférence de la virole le jeu entre les aubes et la virole.

Le carter peut comprendre une alimentation 51 et des raccords électriques 52 tels des fils électriques et/ou des fiches électriques qui permettent d'alimenter chaque actionneur piézoélectrique 46. Chaque fil peut être isolé à l'aide d'une gaine isolante. Les raccords électriques 52 traversent la paroi 30 et rentrent dans la gorge 38. Ils sont reliés à chaque actionneur piézoélectrique 46, éventuellement de manière individuelle. L'alimentation peut être celle de la turbomachine.

Le carter peut comprendre un capteur de vibrations radiales 54 des aubes rotoriques. Le capteur 54 peut mesurer l'amplitude des vibrations radiales des extrémités d'aubes. Ce capteur 54 permet d'estimer la variation, la dispersion de position radiale des aubes 24, et adapter en fonction la marge de sécurité nécessaire. Le capteur de vibrations 54 et/ou le module de mesure du jeu 50 peuvent être optiques ou magnétiques. Ils peuvent comprendre des composants communs, et/ou disposés dans la gorge 38.

Le carter 28 peut comprendre une unité centrale 56 reliée au module de mesure, au module de détermination de l'altitude, au capteur de vibrations, aux actionneurs via l'alimentation. L'unité centrale 56 peut être un ordinateur lié à la turbomachine, ou être propre à l'aéronef sur lequel la turbomachine est montée.

La figure 4 représente un diagramme bloc d'un procédé de commande d'un dispositif d'étanchéité selon l'invention. Le dispositif commande radialement la position et/ou la déformation d'une virole externe d'étanchéité autour d'un étage d'aubes rotoriques, la virole et les aubes étant séparées par un jeu annulaire. Optionnellement, le procédé est itératif et comprend la répétition en boucle des étapes décrites ci-après.

Le procédé peut comprendre l'enchaînement des étapes suivantes, éventuellement dans l'ordre présenté ci-dessous :
(a) une étape de détermination 100 de l'altitude de la turbomachine,
(b) une étape de mesure des vibrations 102 radiales des aubes rotoriques,
(c) une étape de mesure du jeu 104 entre les aubes rotoriques et la virole externe,
(d) une étape d'ajustement du jeu 106 en déplaçant et/ou en déformant radialement la virole externe.

Lors de l'étape (d) ajustement 106, la modification du jeu s'effectue en fonction de l'altitude déterminée lors de l'étape (a) détermination. Plus l'altitude augmente, plus le jeu diminue. Ce choix peut être suivi en considérant qu'à haute altitude, par exemple au-delà d'une altitude seuil A2, les causes pouvant perturber et déplacer le rotor, ou déformer le carter sont peu probables. Ainsi, le risque de contact entre une aube et la virole est très limité, voir inexistant car les causes deviennent prévisibles. Le seuil A2 peut être choisi supérieur ou égal à 4000 m, préférentiellement supérieur ou égal à 8000 m, éventuellement le seuil A2 est supérieur ou égal à 10000 m. Dans ces conditions de vol, le jeu est inférieur à un jeu J1, et l'étanchéité ainsi que le rendement de la turbomachine deviennent optimaux.

À l'opposé, il peut être décidé qu'à basse altitude, le jeu doit être augmenté car la turbomachine est exposée à des conditions de fonctionnement variables et difficilement prévisibles. Ainsi, il est préférable qu'en dessous d'une altitude seuil A1, le jeu devienne supérieur à un jeu J2, ou jeu de sécurité. Le seuil A1 peut être inférieur à 6000 m, préférentiellement inférieur à 2000 m, plus préférentiellement inférieur à 500 m.

Lors de l'étape (d) ajustement 106, la modification du jeu peut également s'effectuer en fonction du jeu précédément mesuré lors de l'étape (b) mesure des vibrations 102, et/ou en fonction des vibrations estimées lors de l'étape (c) mesure du jeu 104. Les vibrations induisent une dispersion des positions des aubes qui impacte la sécurité de fonctionnement requise. Il est à noter que les étapes (b) et (c) sont optionnelles. L'étape (c) est optionnelle car l'étape (d) ajustement 106 peut s'effectuer à partir d'une valeur programmée ou une valeur théorique de base.

## Revendications

1. Carter externe (28) de turbomachine axiale (2), notamment de compresseur (4 ; 6) de turbomachine axiale, le carter (28) comprenant :
- une paroi circulaire (30) comportant une gorge annulaire interne (38) ;
- une virole externe (36) d'étanchéité disposée au moins partiellement dans la gorge (38) et destinée à assurer une étanchéité entre le carter externe (28) et une rangée annulaire d'aubes rotoriques (24) de la turbomachine,
- des éléments de liaison (46) reliant la virole externe (36) à la paroi (30), les éléments de liaison (46) étant des actionneurs piézoélectriques (46) configurés pour déplacer et/ou déformer la virole (36) afin de modifier le jeu entre la virole (36) et les aubes rotoriques (24) ;
**caractérisé en ce que**
les actionneurs piézoélectriques (46) sont disposés en deux rangées annulaires.

2. Carter (28) selon la revendication 1, **caractérisé en ce qu'**il comprend au moins un raccord électrique (52) qui est branché aux actionneurs piézoélectriques (46) et qui traverse la paroi (30), préférentiellement le raccord électrique (46) traverse radialement la paroi au niveau axialement de la gorge annulaire (38).

3. Carter (28) selon la revendication 2, **caractérisé en ce qu'**au moins un ou chaque raccord électrique (52) comprend un fil électrique, la paroi (30) comprenant des étanchéités autour de chaque raccord électrique (52).

4. Carter (28) selon l'une des revendications 1 à 3, **caractérisé en ce qu'**il comprend des joints d'étanchéité circulaires en amont et en aval de la virole externe (36) et coopérant avec la paroi (30).

5. Carter (28) selon l'une des revendications 1 à 4, **caractérisé en ce qu'**il comprend un module de mesure (50) de jeu configuré pour mesurer le jeu entre la virole externe et les aubes rotoriques, le module (50) étant disposé axialement au niveau de la gorge annulaire, éventuellement le module (50) est disposé dans la gorge.

6. Carter (28) selon l'une des revendications 1 à 5, **caractérisé en ce que** la gorge (38) comprend une surface annulaire amont (40) et une surface annulaire aval (42) dont les profils de révolution s'étendent principalement radialement, les actionneurs piézoélectriques (46) étant disposés axialement entre lesdites surfaces annulaires radiales (40 ; 42), préférentiellement chaque actionneur piézoélectrique (46) est disposé à distance de chaque surface annulaire radiale.

7. Carter (28) selon l'une des revendications 1 à 6, **caractérisé en ce que** la paroi (30) comprend une couche isolante électriquement, éventuellement en contact des actionneurs piézoélectriques (46).

8. Carter (28) selon l'une des revendications 1 à 7, **caractérisé en ce que** la paroi (30) comprend des portions annulaires (45) prolongeant axialement la gorge annulaire (38) en amont et en aval, la gorge (38) et les portions annulaires (45) étant venues de matière.

9. Carter (28) selon l'une des revendications 1 à 8, **caractérisé en ce que** la paroi (30) comporte une surface générale interne avec un profil de révolution autour de l'axe de rotation (14) de la turbomachine (2), et **en ce que** la virole externe (36) comprend une surface annulaire interne, la surface annulaire interne de la virole (36) étant mobile entre une position radialement interne à la surface générale interne de la paroi (30) et une position radialement externe à la surface générale interne de la paroi (30).

10. Carter (28) selon l'une des revendications 1 à 9, **caractérisé en ce que** la virole (36) est segmentée, éventuellement la virole (36) est métallique et forme un ruban ; ou la virole est venue de matière et comprend une surface annulaire.

11. Carter (28) selon l'une des revendications 1 à 10, **caractérisé en ce qu'**il est un carter (28) composite à matrice organique, éventuellement le carter est formé de demi-coquilles.

12. Carter (28) selon l'une des revendications 1 à 11, **caractérisé en ce que** la virole (36) comprend un support et une couche circulaire ou semi-circulaire de matériau abradable.

13. Turbomachine (2) comprenant un carter externe (28) entourant au moins une rangée annulaire d'aubes rotoriques (24), **caractérisée en ce que** le carter (28) est conforme à l'une des revendications 1 à 12, préférentiellement le carter est un carter de compresseur, éventuellement un carter de compresseur basse pression (4).

14. Turbomachine (2) selon la revendication 13, **caractérisée en ce qu'**elle comprend un capteur de vibrations radiales (54) des aubes rotoriques (24), les actionneurs piézoélectriques (46) étant configurés de sorte à déplacer et/ou à déformer radialement la virole externe (36) en fonction des vibrations radiales des aubes mesurées par le capteur de vibrations (54).

15. Procédé de commande d'un dispositif d'étanchéité (34) de carter externe (28) de turbomachine axiale (2), le dispositif (34) comprenant une virole externe (36) mobile et définissant un jeu radial autour d'une rangée annulaire d'aubes rotoriques (24) de la turbomachine (2), le carter externe étant selon l'une des revendications 1 à 12, le procédé comprenant :
(c) une étape de mesure du jeu (104) entre la virole externe et les aubes rotoriques, puis
(d) une étape d'ajustement (106) du jeu en fonction du jeu mesuré lors de l'étape (c) mesure du jeu (104).

## Patentansprüche

1. Ein Außengehäuse (28) einer Axialturbomaschine (2), insbesondere eines Axialturbomaschinenverdichters (4; 6), wobei das Gehäuse (28) Folgendes umfasst:
- eine kreisförmige Wand (30) mit einer inneren Ringnut (38);
- eine Außenhülse (36), die zumindest teilweise in der Ringnut (38) angeordnet ist und dazu dient, eine Abdichtung zwischen dem äußeren Gehäuse (28) und einer kreisförmigen Reihe von Rotorschaufeln (24) der Turbomaschine zu gewährleisten
- Verbindungselemente (46), die das Einspannen der Außenhülse (36) an der Wand (30) gewährleisten, wobei die Verbindungselemente (46) piezoelektrische Aktoren (46) sind, die so gestaltet sind, dass sie die Außenhülse (36) verschieben und/oder verformen, um das Spiel zwischen der Außenhülse (36) und den Rotorschaufeln (24) zu verändern;
**dadurch gekennzeichnet, dass**
die piezoelektrischen Betätigungselementen (46) in zwei ringförmigen Feldern angeordnet sind.

2. Das Gehäuse (28) nach Anspruch 1, **dadurch gekennzeichnet, dass** es mindestens einen elektrischen Anschluss (52) umfasst, der mit den piezoelektrischen Betätigungselementen (46) verbunden ist und durch die Wand (30) verläuft, wobei der elektrische Anschluss (46) vorzugsweise radial durch die Wand auf der axialen Höhe der Ringnut (38) verläuft.

3. Das Gehäuse (28) nach Anspruch 2, **dadurch gekennzeichnet, dass** mindestens ein oder jeder elektrische Anschluss (52) mit einem elektrischen Draht versehen ist, wobei die Wand (30) um jeden elektrischen Anschluss (52) herum Dichtungselemente aufweist.

4. Das Gehäuse (28) nach einem der Ansprüche 1 bis 3, **dadurch gekennzeichnet, dass** es kreisförmige Dichtungen umfasst, die vor und hinter der Außenhülse (36) angebracht sind und die mit der Wand (30) zusammenwirken.

5. Ein Gehäuse (28) nach einem der Ansprüche 1 bis 4, **dadurch gekennzeichnet, dass** es mit einem Spielmessmodul (50) versehen ist, das so gestaltet ist, dass es das Spiel zwischen der Außenhülse und den Rotorschaufeln misst, wobei das Modul (50) axial an der Ringnut angeordnet ist und das Modul (50) gegebenenfalls in der Ringnut angeordnet ist.

6. Ein Gehäuse (28) nach einem der Ansprüche 1 bis 5, **dadurch gekennzeichnet, dass** die Ringnut (38) eine stromaufwärts gelegene Ringfläche (40) und eine stromabwärts gelegene Ringfläche (40) aufweist, deren Drehprofile sich im Wesentlichen radial erstrecken, wobei die piezoelektrischen Betätigungselemente (46) axial zwischen den radialen Ringflächen (40; 42) angeordnet sind, wobei vorzugsweise jedes piezoelektrische Betätigungselement (46) in einem Abstand von jeder radialen Ringfläche angeordnet ist.

7. Ein Gehäuse (28) nach einem der Ansprüche 1 bis 6, **dadurch gekennzeichnet, dass** die Wand (30) eine elektrisch isolierende Schicht aufweist, die gegebenenfalls in Kontakt mit den piezoelektrischen Betätigungselementen (46) steht.

8. Ein Gehäuse (28) nach einem der Ansprüche 1 bis 7, **dadurch gekennzeichnet, dass** die Wand (30) ringförmige Abschnitte (45) umfasst, die die Ringnut (38) stromaufwärts und stromabwärts axial verlängern, wobei die Ringnut (38) und die ringförmigen Abschnitte (45) aus einem Stück bestehen.

9. Ein Gehäuse (28) nach einem der Ansprüche 1 bis 8, **dadurch gekennzeichnet, dass** die Wand (30) eine innere allgemeine Oberfläche mit einem Drehprofil um die Drehachse (14) der Turbomaschine (2) aufweist und dass die Außenhülse (36) eine innere ringförmige Oberfläche aufweist, wobei die innere ringförmige Oberfläche der Außenhülse (36) zwischen einer Position radial innerhalb der inneren allgemeinen Oberfläche der Wand (30) und einer Position radial außerhalb der inneren allgemeinen Oberfläche der Wand (30) beweglich ist.

10. Das Gehäuse (28) nach einem der Ansprüche 1 bis 9, **dadurch gekennzeichnet, dass** die Außenhülse (36) unterteilt ist, wobei sie wahlweise aus Metall besteht und ein Band bildet, oder dass sie aus einem Stück besteht und eine ringförmige Oberfläche aufweist.

11. Ein Gehäuse (28) nach einem der Ansprüche 1 bis 10, **dadurch gekennzeichnet, dass** es sich um ein Verbundgehäuse (28) mit einer organischen Matrix handelt, wobei das Gehäuse gegebenenfalls aus Halbschalen gebildet ist.

12. Ein Gehäuse (28) nach einem der Ansprüche 1 bis 11, **dadurch gekennzeichnet, dass** die Außenhülse (36) aus einem Träger und einer kreisförmigen oder halbkreisförmigen Schicht aus abrasivem Material besteht.

13. Turbomaschine (2) mit einem Außengehäuse (28), das mindestens einen ringförmigen Rotorschaufelstrang (24) umgibt, **dadurch gekennzeichnet, dass** das Gehäuse (28) nach einem der Ansprüche 1 bis 12 gestaltet ist, wobei es sich vorzugsweise um ein Verdichtergehäuse, gegebenenfalls ein Niederdruckverdichtergehäuse (4) handelt.

14. Turbomaschine (2) nach Anspruch 13, **dadurch gekennzeichnet, dass** sie einen Radialschwingungssensor (54) der Rotorschaufeln (24) umfasst, wobei die piezoelektrischen Betätigungselemente (46) so gestaltet sind, dass sie die Außenhülse (36) in Abhängigkeit von den durch den Schwingungssensor (54) gemessenen Radialschwingungen der Schaufeln bewegen und/oder radial verformen.

15. Ein Verfahren zur Steuerung einer Dichtungsvorrichtung (34) für das Außengehäuse (28) einer axialen Turbomaschine (2), wobei die Vorrichtung (34) eine Außenhülse (36) umfasst, die beweglich ist und einen radialen Zwischenraum um eine ringförmige Anordnung von Rotorschaufeln (24) der Turbomaschine (2) definiert, wobei das Außengehäuse nach einem der Ansprüche 1 bis 12 ist, wobei das Verfahren Folgendes umfasst:
(c) einen Schritt der Messung des Spiels (104) zwischen der Außenhülse und den Rotorschaufeln, dann
(d) einen Schritt der Spieleinstellung (106) entsprechend dem im Schritt (c) der Spielmessung (104) gemessenen Spiel.

## Claims

1. External casing (28) of an axial turbomachine (2), notably of an axial turbomachine compressor (4; 6), the casing (28) comprising:
- a circular wall (30) comprising an internal annular groove (38);
- an external sealing shroud (36) arranged at least partially in the groove (38) and intended to provide sealing between the external casing (28) and an annular row of rotor blades (24) of the turbomachine,
- connecting elements (46) connecting the external shroud (36) to the wall (20), the connecting elements (46) being piezoelectric actuators (46) configured to move and/or deform the shroud (36) so as to alter the clearance between the shroud (36) and the rotor blades (24); **characterized in that**
the piezoelectric actuators (46) are arranged in two annular rows.

2. Casing (28) according to Claim 1, **characterized in that** it comprises at least one electric connection (52) which is connected to the piezoelectric actuators (46) and which passes through the wall (30); for preference the electrical connection (46) passes radially through the wall axially in the region of the annular groove (38).

3. Casing (28) according to Claim 2, **characterized in that** at least one or each electrical connection (52) comprises an electric wire, the wall (30) comprising seals around each electrical connection (52).

4. Casing (28) according to one of Claims 1 to 3, **characterized in that** it comprises circular seals upstream and downstream of the external shroud (36) and collaborating with the wall (30).

5. Casing (28) according to one of Claims 1 to 4, **characterized in that** it comprises a clearance measurement module (50) configured to measure the clearance between the external shroud and the rotor blades, the module (50) being arranged axially in the region of the annular groove; possibly the module (50) is arranged in the groove.

6. Casing (28) according to one of Claims 1 to 5, **characterized in that** the groove (38) comprises an upstream annular surface (40) and a downstream annular surface (42) of which the profiles of revolution extend mainly radially, the piezoelectric actuators (46) being arranged axially between the said radial annular surfaces (40; 52); for preference each piezoelectric actuator (46) is positioned some distance away from each radial annular surface.

7. Casing (28) according to one of Claims 1 to 6, **characterized in that** the wall (30) comprises an electrically insulating layer, possibly in contact with the piezoelectric actuators (46).

8. Casing (28) according to one of Claims 1 to 7, **characterized in that** the wall (30) comprises annular portions (45) axially extending the annular groove (38) upstream and downstream, the groove (38) and the annular portions (45) being formed as one.

9. Casing (28) according to one of Claims 1 to 8, **characterized in that** the wall (30) comprises an internal overall surface with a profile of revolution about the axis of rotation (14) of the turbomachine (2), and **in that** the external shroud (36) comprises an internal annular surface, the internal annular surface of the shroud (36) being able to move between a position radially inside the internal general surface of the wall (30) and a position radially outside the internal general surface of the wall (30).

10. Casing (28) according to one of Claims 1 to 9, **characterized in that** the shroud (36) is segmented, possibly the shroud (36) is made of metal and forms a strip; or the shroud is formed as one and comprises an annular surface.

11. Casing (28) according to one of Claims 1 to 10, **characterized in that** it is a composite casing (28) with an organic matrix, possibly the casing is formed of half-shells.

12. Casing (28) according to one of Claims 1 to 11, **characterized in that** the shroud (36) comprises a support and a circular or semicircular layer of an abradable material.

13. Turbomachine (2) comprising an external casing (28) surrounding at least one annular row of rotor blades (24), **characterized in that** the casing (28) is in accordance with one of Claims 1 to 12, for preference the casing is a compressor casing, possibly a casing of a low-pressure compressor (4).

14. Turbomachine (2) according to Claim 13, **characterized in that** it comprises a vibration sensor (54) sensing radial vibrations of the rotor blades (24), the piezoelectric actuators (46) being configured in such a way as to move and/or deform the external shroud (36) radially according to the radial vibrations of the blades which are measured by the vibration sensors (54).

15. Method for controlling a device (34) for sealing the external casing (28) of an axial turbomachine (2), the device (34) comprising a mobile outer shroud (36) defining a radial clearance around an annular row of rotor blades (24) of the turbomachine (2), the method comprising:
(c) a step of measuring the clearance (104) between the external shroud and the rotor blades, followed by
(d) a step (106) of adjusting the clearance according to the clearance measured during the step (c) of measuring the clearance (104).
